# EUROPEAN PATENT APPLICATION

(11) **EP 1 717 552 A1**
(43) Date of publication of application: **02.11.2006**
(21) Application number: 05710152.9
(22) Date of filing: 04.02.2005
(51) Int. Cl.: G01C 21/00, G08G 1/0969, G09B 29/10

(54) **GUIDE ROUTE SEARCH DEVICE, GUIDE ROUTE SEARCH METHOD, AND COMPUTER PROGRAM THEREOF**

(30) Priority: 17.02.2004 JP 2004039336
(71) Applicant: Kabushiki Kaisha Kenwood, Hachiouji-shi, Tokyo 192-8525 (JP)
(72) Inventor: KANEDA, Masaki, 1940014 (JP); UENO, Masahiro, 1680062 (JP); AKIYOSHI, Hiromi, Machida-shi, Tokyo 1940045 (JP)
(74) Representative: Leinweber & Zimmermann
(86) International application number: PCT/JP2005/002107
(87) International publication number: WO 2005/078392

(57) **Abstract**

A guide route search device basically includes specification means, calculation means, judgment means, and selection means. The specification means specifies a plurality of locations. The calculation means calculates the arrival time at each of the locations when successively visiting them with a certain via-sequence while eliminating passing through a place which may be congested. The judgment means judges whether the arrival time of each location calculated is matched with the arrival time condition at each location. The selection means selects the via-sequence where the judgment means has judged that the conditions are matched at all the locations specified, as a via-sequence of the guide route. Thus, it is possible to find a guide route via a plurality of via-locations so that a stay with a desired state can be realized at each via-location.

## Description

### Technical Field

The present invention relates to a guide route search device, a navigation device and a guide route search method.

### Background Art

A route search method for searching guide paths via a plurality of via-locations is disclosed in Japanese Patent Laid-Open No. 2001-221647 (Patent Document 1) (more specifically, in the scope of claims, and the paragraphs [0033] through [0060] of the specifications thereof). The conventional route search method disclosed in Patent Document 1 involves determining a passage sequence of a plurality of via-locations based on search conditions set for searching routes and dependence relationships among particular via-locations, and searching a route to a destination which passes through the plurality of via-locations according to the passage sequence.

In addition, the conventional route search method disclosed in Patent Document 1 uses information included in VICS information, such as traffic congestion, traffic regulations, weather conditions and the like, to calculate a traveling cost for each passage sequence in a via-location list based on search conditions, and adds the calculated traveling costs to the via-location list.

The conventional route search method disclosed in Patent Document 1 is a method for searching routes which visit a plurality of via-locations.

Therefore, when actually traveling according to a guide route obtained by this conventional route search method, for instance, spending too much time or the like at a previously visited via-location may result in a failure in reaching a restaurant, which is the next via-location, or in running out of time to have a meal due to a delayed arrival at the restaurant, and ultimately missing out on lunch.

In addition, an actual route to each via-location is sometimes congested. Such congestions of routes may consume time to the extent that all of the desired via-locations can no longer be visited.

The present invention has been made in consideration of the above problems, and its object is to achieve a guide route search device, a navigation device and a guide route search method which discovers guide routes via a plurality of via-locations so that stays under desired states may be realized at each via-location.

### Disclosure of the Invention

In order to achieve the above-described object, a guide route search device according to a first aspect of the present invention is configured to include: specification means for specifying a plurality of locations; calculation means for calculating an arrival time at each of the specified locations when successively visiting the locations in a certain via-sequence while avoiding passing through congested places and/or places which may be congested; judgment means for judging whether the calculated arrival time of each location matches an arrival time condition at each location; and selection means for selecting the via-sequence where the judgment means has judged that the conditions are matched at all the locations specified, as a via-sequence of the guide route.

In the guide route search device according to the first aspect, the calculation means includes: determination means for determining a via-sequence of the specified plurality of via-locations; re-search means for re-searching a route between two locations when the searched route includes a congested place and/or a place which may be congested, so as to avoid the congested place and/or the place which may be congested; and time calculation means for calculating an arrival time at each of the locations, either based on a travel time between the two locations of a route searched by the search means when the route searched by search means does not include a congested place and/or a place which may be congested, or based on a travel time between the two locations of a route re-searched by the re-search means when the route searched by the search means includes a congested place and/or a place which may be congested.

A guide route search device according to a second aspect of the present invention is configured to include: specification means for specifying a plurality of locations; determination means for determining a via-sequence of the specified plurality of via-locations; search means for searching a route between two successive locations in the via-sequence; first time calculation means for calculating an arrival time at each of the locations based on a travel time between the two locations in the route searched by the search means; first judgment means for judging whether the arrival time of each location calculated by the first time calculation means matches an arrival time condition at each location; re-search means for re-searching a route between the two locations when the route which has been judged by the first judgment means to match the arrival time condition includes a congested place and/or a place which may be congested, so as to avoid the congested place and/or the place which may be congested; second time calculation means for calculating an arrival time at each of the locations based on a travel time between the two locations in the route re-searched by the re-search means; second judgment means for judging whether the arrival time at each location calculated by the second time calculation means matches the arrival time condition at each location; and selection means for selecting as the via-sequence of a guide route a single via-sequence from the via-sequences where the first judgment means has judged that the conditions are matched at all the locations specified and which do not include congested places and/or places which may be congested, and from via-sequences where the second judgment means has judged that the conditions are matched at all the locations specified.

In the guide route search device according to the second aspect, the second time calculation means operates so as to generate arrival times for all the selected locations whenever a travel time between the two locations is computed, and the judgment means operates so as to judge whether the arrival time of each location generated by the time calculation means matches the arrival time condition at each location whenever a travel time between the two locations is computed.

In addition, the apparatus according to the above-described second aspect is arranged to operate so that: the first judgment means judges whether the arrival time at each location calculated by the first time calculation means matches a guide time slot at each location; the second judgment means judges whether the arrival time at each location calculated by the second time calculation means matches a guide time slot at each location; and the re-search means re-searches a route between the two locations in which the arrival times at a portion of or all of the locations are judged by the first judgment means to be earlier than the respective guide time slots thereof, and when the route includes congested places and/or places which may be congested for via-sequences where the arrival times of the remaining locations match the respective guide time slots thereof, re-searches a route between the two locations so as to avoid the congested places and/or the places which may be congested.

According to the present invention which uses the above configuration, a noteworthy effect may be achieved in that it is now possible to find a guide route via a plurality of via-locations so that a stay under a desired state can be realized at each via-location.

In another aspect, the present invention may be understood as being a guide route search method consisting of a series of signal processing steps performed by the guide route search method apparatus described above.

In this case, the present invention provides a guide route search method comprising: a specification step for specifying a plurality of locations; a calculation step for calculating the arrival time at each of the locations when successively visiting the locations in a certain via-sequence while avoiding passing through congested places and/or places which may be congested; a judgment step for judging whether the calculated arrival time of each location matches the arrival time condition at each location; and a selection step for selecting the via-sequence where all the specified locations are judged to match arrival time conditions in the judgment step, as a guide via-sequence.

In yet another aspect, the present invention may be understood as being a computer program which is executed to perform the processing using the guide route search method apparatus described above.

In this case, the present invention provides a computer program for operating a guide route search method comprising: a specification step for specifying a plurality of locations; a calculation step for calculating an arrival time at each of the locations when successively visiting the locations in a certain via-sequence while avoiding passing through congested places and/or places which may be congested; a judgment step for judging whether the calculated arrival time of each location matches an arrival time condition at each location; and a selection step for selecting a via-sequence where all the specified locations are judged to match arrival time conditions in the judgment step, as a guide via-sequence.

### Brief Description of the Drawings

Figure 1 is a block diagram showing a hardware configuration of a vehicle-mounted navigation device according to a first embodiment of the present invention;
Figure 2 is an explanatory diagram of a memory content of a hard disk drive shown in Figure 1;
Figure 3 is a diagram showing an example of location search data shown in Figure 2;
Figure 4 is a diagram showing an example of a table of location conditions based on genre shown in Figure 2;
Figure 5 is a diagram showing an example of accumulated congestion data regarding an up lane of a link (road) having an identification number of "XX", according to the first embodiment;
Figure 6 is a diagram showing another example of accumulated congestion data regarding an up lane of a link (road) having an identification number of "XX", according to the first embodiment;
Figure 7 is a block diagram showing a guide route generation function realized in a vehicle-mounted navigation device by a central processing unit shown in Figure 1 by executing a guide route generation program;
Figure 8 is a block diagram showing a route guidance function realized in a vehicle-mounted navigation device by the central processing unit shown in Figure 1 by executing a route guidance program;
Figure 9 is a flowchart showing guide route generation processing by the vehicle-mounted navigation device shown in Figure 1;
Figure 10 is a diagram showing an example of a route pattern list generated by a route pattern generation unit shown in Figure 7;
Figure 11 is a diagram showing an example of a display screen of a route pattern according to the first embodiment;
Figure 12 is a diagram showing an example of a detail display screen of a route pattern according to the first embodiment;
Figure 13 is a block diagram showing a guide route generation function realized on a vehicle-mounted navigation device according to a second embodiment of the present invention;
Figure 14 is a flowchart showing guide route generation processing by the vehicle-mounted navigation device according to the second embodiment;
Figure 15 is a block diagram showing a guide route generation function realized on a vehicle-mounted navigation device according to a third embodiment of the present invention;
Figure 16 is a flowchart showing guide route generation processing by the vehicle-mounted navigation device according to the third embodiment;
Figure 17 is a block diagram showing a guide route generation function realized on a vehicle-mounted navigation device according to a fourth embodiment of the present invention;
Figure 18 is a flowchart showing guide route generation processing by the vehicle-mounted navigation device according to the fourth embodiment; and
Figure 19 is a flowchart showing an example of a variation of guide route generation processing according to the fourth embodiment.

### Best Mode for Carrying Out the Invention

Embodiments of a guide route search device, a navigation device and a guide route search method according to the present invention will now be specifically described in detail with reference to the drawings. A vehicle-mounted navigation device mounted in vehicles such as automobiles, two-wheeled motor vehicles and airplanes will be described as an example of the navigation device. The guide route search device will be described as a component of the configuration of the vehicle-mounted navigation device. The guide route search method will be described as a portion of the operations of the vehicle-mounted navigation device. First Embodiment

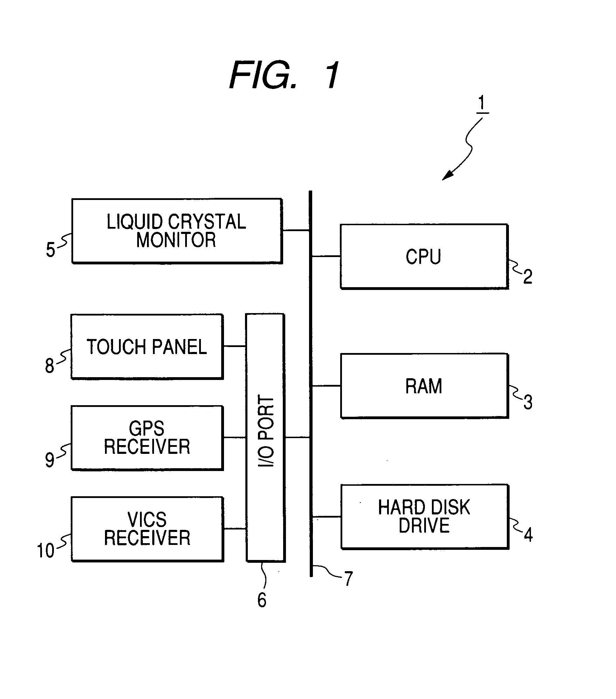

Figure 1 is a block diagram showing a hardware configuration of a vehicle-mounted navigation device according to a first embodiment of the present invention.

A vehicle-mounted navigation device 1 includes a central processing unit (CPU) 2, a RAM (random access memory) 3, a hard disk drive 4 as guide route storage means, a liquid crystal monitor 5 as output means, an I/O (input/output) port 6, and a system bus 7 which connects these elements.

The hard disk drive 4 is a data storage device for storing programs and data. The central processing unit 2 executes programs. The RAM 3 is a semiconductor memory for storing programs being executed and data. The liquid crystal monitor 5 is a display device for displaying images based on display data.

The I/O port 6 is provided for connecting peripheral devices thereto. A touch panel 8, a GPS (global positioning system) receiver 9 and a VICS (Vehicle Information and Communication System) receiver 10 are connected as peripheral devices to the I/O port 6 of the present embodiment.

The touch panel 8 is an input device allocated to be superimposed on the display screen of the liquid crystal monitor 5, and outputs signals representing pressed portions thereof.

The GPS receiver 9 is a current position information acquisition device which receives radio waves from a GPS satellite and outputs latitudinal and longitudinal data representing the current latitude and longitude values.

The VICS receiver 10 receives FM waves, optical beacons or radio beacons and outputs VICS data contained therein. VICS data contains information indicating traffic regulations on roads or information indicating congestion and the like.

The liquid crystal monitor 5 may alternatively be connected to the system bus 7 via the I/O port 6. In addition, a vehicle speed pulse generator which outputs pulses according to the speed of a vehicle, or a gyrosensor which indicates the direction of movement of a vehicle may be connected to the I/O port 6. Directions and distances of movement of a vehicle may be obtained by computing the vehicle speed pulses and the directions indicated by the gyrosensor.

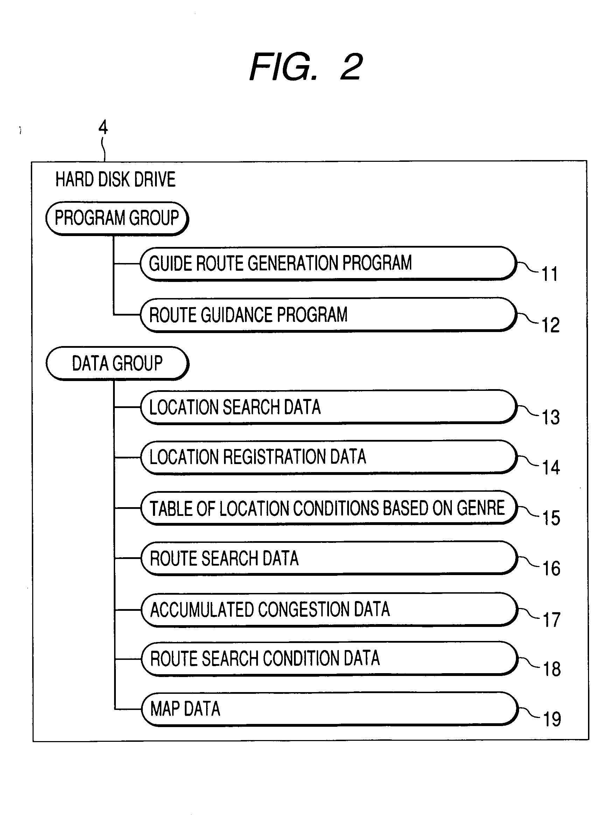

Figure 2 is a diagram of a memory content of the hard disk drive 4 shown in Figure 1.

A program group and a data group are stored in the hard disk drive 4. The program group of the hard disk drive 4 includes a guide route generation program 11 and a route guidance program 12. The data group of the hard disk drive 4 includes location search data 13, location registration data 14, a table of location conditions based on genre 15, route search data 16, accumulated congestion data 17, route search condition data 18, and map data 19.

The location search data 13, the table of location conditions based on genre 15, the route search data 16, the accumulated congestion data 17, the map data 19 and the like may be arranged to be recorded on a computer-readable storage media insertable to and removable from the vehicle-mounted navigation device 1, and the vehicle-mounted navigation device 1 may be arranged to load such data from the storage media. In addition, the program group and the data group may be arranged to be stored in separate storage media.

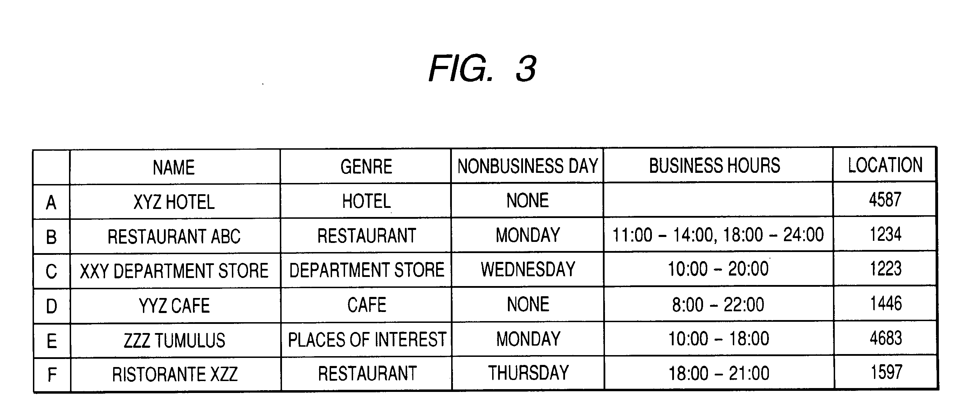

The location search data 13 is data regarding locations. Each record of the location search data 13 is composed of data representing information regarding a single location. Figure 3 is a diagram showing an example of the location search data 13 shown in Figure 2. In Figure 3, a record regarding a single location is registered in each row.

For instance, the record indicated in the second row in Figure 3 includes, as registered information regarding a location named "Restaurant ABC", the name of the restaurant "Restaurant ABC", a genre "restaurant", a nonbusiness day "Monday", business hours of "11:00 to 14:00, 18:00 to 24:00", and a location value of "1234". Locations in the location search data 13 are preregistered prior to shipment or the like of the vehicle-mounted navigation device 1, and include restaurants, amusement facilities and the like.

The location values to be registered in the location search data 13 may be either values based on the latitudes and longitudes of locations, or other values corresponding to the values based on the latitudes and longitudes, such as "Map Code (registered trademark)" values. In addition, a location value may be either a value based on the latitude and longitude of the restaurant (location) itself indicated by its name, or a value based on the latitude and longitude of a related location such as a parking lot affiliated with the restaurant (location) indicated by the name.

The location registration data 14 is data regarding locations registered by a user. Each record of the location registration data 14 is composed of data representing information regarding a single location. More specifically, each record of the location registration data 14 contains, for instance, data representing a name, genre, nonbusiness days, business hours, location value and the like of a location registered by the user. Locations to be registered by the user may include his/her home or a home of an acquaintance.

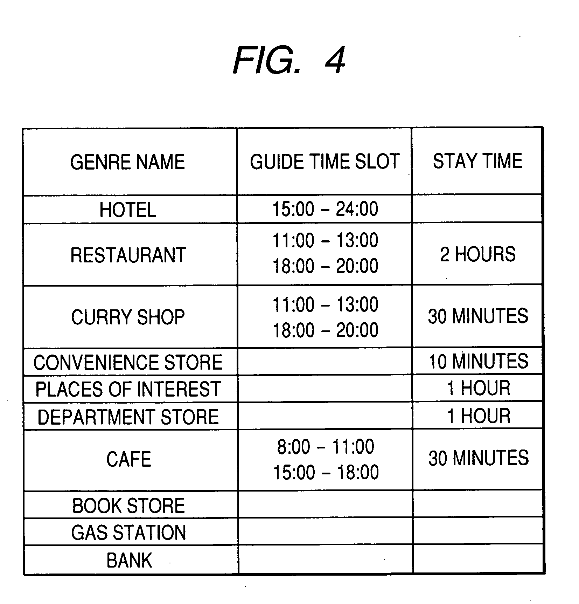

The table of location conditions based on genre 15 includes data regarding conditions for using each location as a via-location, according to genre. Genre is used for classifying locations registered in the location search data 13 and the location registration data 14. Each record of the table of location conditions based on genre 15 is composed of data representing information regarding a single genre. Figure 4 is a diagram showing an example of the table of location conditions based on genre 15 shown in Figure 2. In Figure 4, each row represents registered information for each record regarding a single genre.

For instance, the record indicated in the second row in Figure 4 includes, as information regarding the genre "restaurant", the name of the genre "restaurant", a guide time slot to the restaurant of "11:00 to 13:00, 18:00 to 20:00", and a stay time of "2 hours". Other genres may include places of interest or hotels.

Route search data 16 is data regarding roads used in route search, and is composed of a plurality of node data and a plurality of link data. Node data is data representing information regarding a location such as an intersection, and is composed of data representing identification information, data representing a value of the location, data representing cost, and list data of an identification number of a link connected to the node or the like. Link data is data representing information regarding a route such as roads which connect nodes, and is composed of data representing identification information of the route, data representing cost information, and list data of identification numbers of connected nodes or the like.

The nodes and links of the route search data 16 are mutually related by list data of identification information. Therefore, a route from a node to another node may be searched by identifying a link from list data of identification information of the node, then identifying the other node in the list data of identification information of the identified link, and then identifying another link using the list data of identification information of the identified other link, or in other words, by sequentially identifying nodes and links in list data of identification information.

Cost information included in such node data and link data is, for instance, information which indicates difficulty of passage through a location corresponding to the node, or difficulty of passage through a road corresponding to the link. In addition, in cost information indicating difficulty of passage, the more difficult, the higher the cost.

Cost information may include, for instance, cost information based on road types such as general roads or expressways, cost information according to the number of lanes in a road, cost information according to turnings of intersections, or cost information according to the number of intersections and the like. In addition, the cost of a route is obtained by, for instance, by multiplying cost information of a node contained in the route by a coefficient according to search conditions, then multiplying cost information of a link contained in the route by a coefficient according to search conditions, and finally adding the two computation results. Furthermore, when, for instance, selecting a route from a plurality of routes, the cost computation results of the plurality of routes should be compared to select the route with the smallest value of the cost computation.

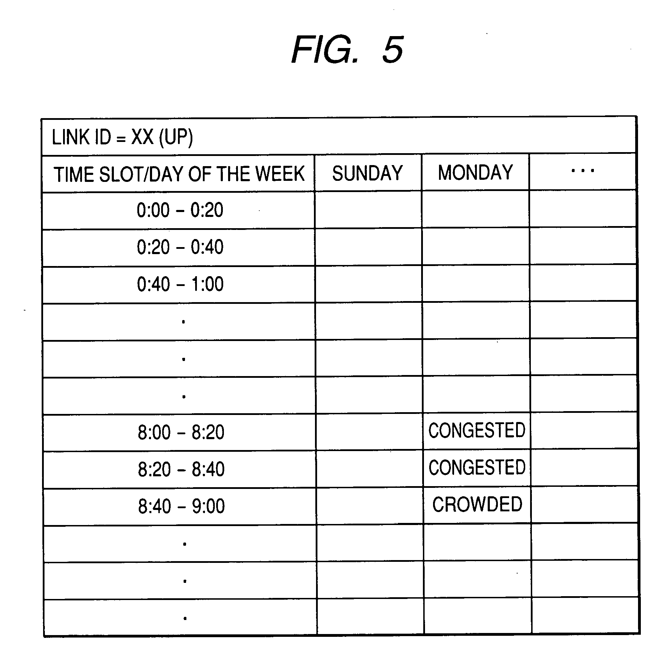

The accumulated congestion data 17 is data representing congestion information. This data representing congestion information is obtained from VICS information outputted by the VICS receiver 10 or the like. Figure 5 is a diagram showing an example of accumulated congestion data 17 regarding an up lane of a link (road) having an identification number of "XX". In Figure 5, congestion information of each link is registered after being classified into day of the week-based information and time slot-based information.

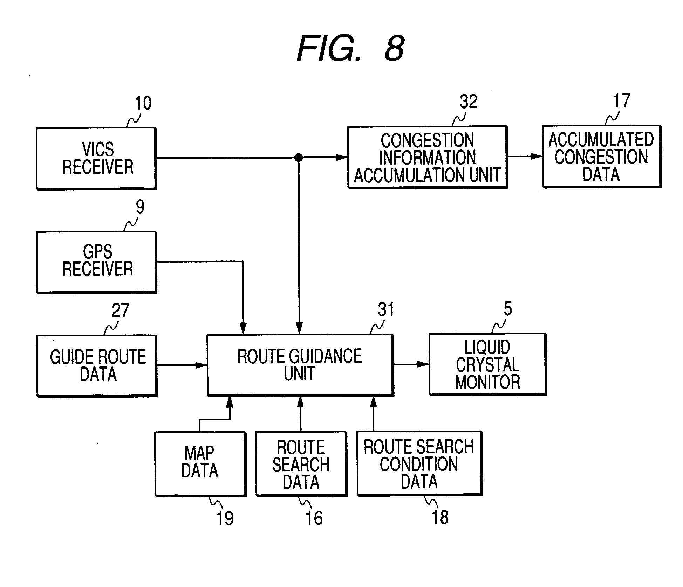

In the accumulated congestion information 17 shown in Figure 5, 8:00 to 8:40 on Monday is indicated as "congested", while 8:40 to 9:00 on Monday is indicated as "crowded". In addition, the days of the week and time slots which have been left blank in Figure 5 mean that either no congestion has previously occurred, or no congestion information has been previously obtained.

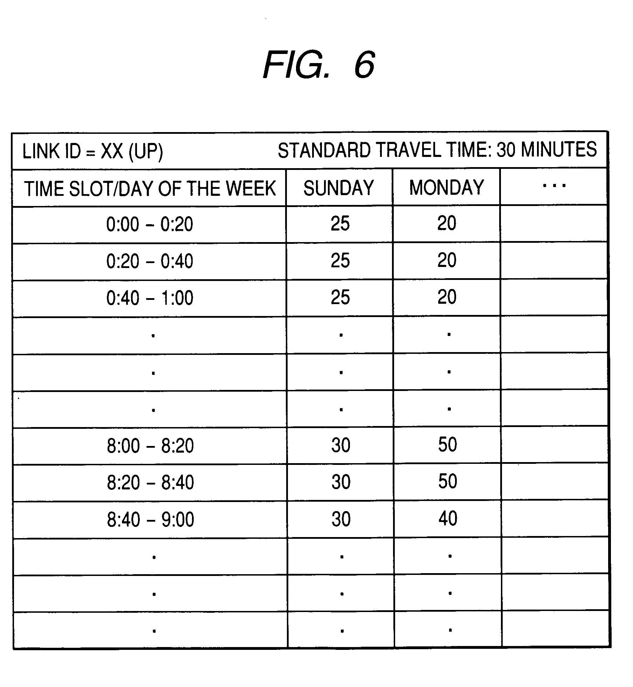

Alternatively, in the time slots of each day of the week, as shown in Figure 6, travel times required for passing through the link may be registered instead of information indicating degrees of congestion such as "congested" or "crowded". Figure 6 is a diagram showing another example of accumulated congestion data 17 regarding an up lane of a link (road) having an identification number of "XX".

In the accumulated congestion data 17 shown in Figure 6, judgment of whether a given time slot of a given day of the week is congested may be performed by, for instance, deeming an average value of all registered travel times as a standard travel time, and judging a time slot of a day of the week with a registered travel time that is longer than a travel time obtained by multiplying the standard travel time by a predetermined coefficient (α) to be congested. The standard travel time may be registered in advance in the accumulated congestion data 17 or the route search data 16.

The route search condition data 18 is data regarding search conditions used when searching for recommended routes. This data indicates selection criteria for selecting a single route from a plurality of routes. More specifically, for instance, data representing search based on minimum distance or minimum travel time, data representing searching with preference given to general roads, or data representing searching with preference given to toll roads and the like may be stored in the route search condition data 18. The route search condition data 18 may be data representing search based on a plurality of criteria instead of a single criterion, such as data representing searching based on minimum travel time with preference given to general roads.

Map data 19 includes map display data. The map display data is, for instance, data obtained by converting maps of a predetermined area such as Japan, the Kanto region or the metropolis of Tokyo, into image data consisting of a plurality of dots. Each dot of the map display data includes luminance information. In addition, maps of predetermined areas include road maps, house maps and the like. Furthermore, the map data 19 includes data for identifying a value of a location of each dot or a value of the location in the map display data.

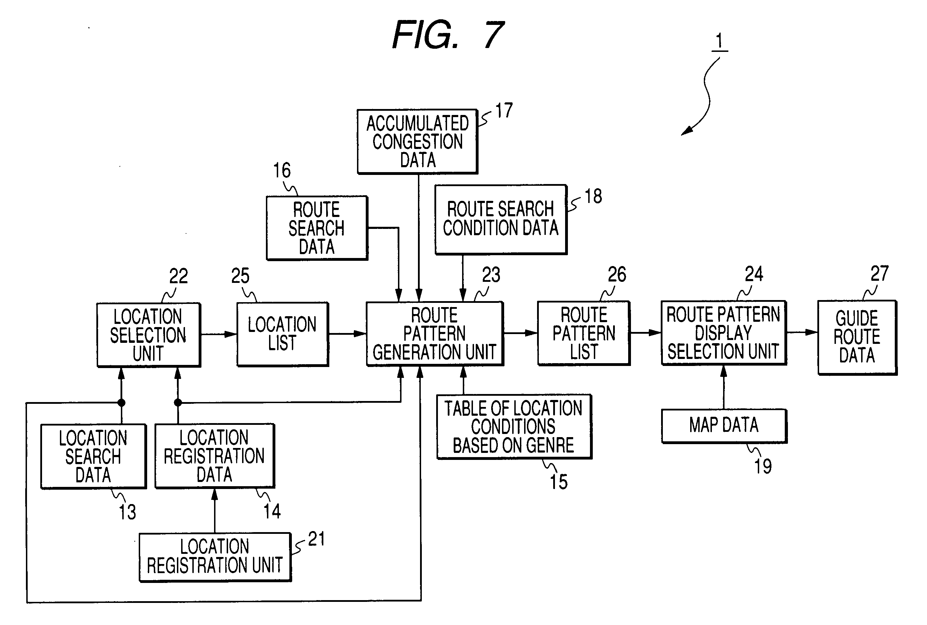

When executed by the central processing unit 2, the guide route generation program 11 realizes a guide route generation function in the vehicle-mounted navigation device 1. Figure 7 is a block diagram showing a guide route generation function realized in the vehicle-mounted navigation device 1 by the central processing unit 2 shown in Figure 2 by executing the guide route generation program 11.

When the central processing unit 2 executes the guide route generation program 11, a location registration unit 21, a location selection unit 22 as specification means, a route pattern generation unit 23, and a route pattern display selection unit 24 as selection means are realized in the vehicle-mounted navigation device 1.

The location registration unit 21 registers new locations in the location registration data 14, changes the contents of records registered in the location registration data 14, or deletes records registered in the location registration data 14.

The location selection unit 22 selects locations from the location search data 13 and the location registration data 14, and registers the selected locations into a location list 25. The location list 25 allows registration of one or more locations.

The route pattern generation unit 23 generates a route pattern which originates at a departure point (for instance, the current location) and sequentially visits the locations registered in the location list 25. In addition, the route pattern generation unit 23 generates a route pattern list 26, and registers data representing route patterns into the route pattern list 26. As data representing each route pattern, data representing a via-sequence of locations and data representing an arrival time at each location are registered into the route pattern list 26.

The route pattern display selection unit 24 displays route patterns registered in the route pattern list 26. At this point, if so requested, the route pattern display selection unit 24 displays route patterns so as to be superimposed on map data 19. In addition, the route pattern display selection unit 24 stores route patterns selected by the user into the hard disk drive 4 as guide route data 27.

When executed by the central processing unit 2, the route guidance program 12 realizes a route guidance function in the vehicle-mounted navigation device 1. Figure 8 is a block diagram showing a route guidance function realized in the vehicle-mounted navigation device 1 by the central processing unit 2 shown in Figure 1 by executing the route guidance program 12.

When the central processing unit 2 executes the route guidance program 12, a route guidance unit 31 as guide data generation means, and a congestion information accumulation unit 32 are realized in the vehicle-mounted navigation device 1.

The route guidance unit 31 displays maps loaded from the map data 19, current locations identified based on the current latitude and longitude of the GPS receiver 9, or guide routes 27 stored in the hard disk drive 4 onto the liquid crystal monitor 5. In addition, the route guidance unit 31 searches guide route data 27 from the current location to a next location using route search data 16, route search condition data 18 and VICS data, and displays a guide route based on the guide route data 27 on the liquid crystal monitor 5.

The congestion information accumulation unit 32 registers congestion information contained in VICS data outputted by the VICS receiver 10 into the accumulated congestion data 17.

Next, operations of the vehicle-mounted navigation device 1 according to the first embodiment will be described. Based on the above-described configuration, the vehicle-mounted navigation device 1 registers, changes or deletes locations, generates guide route data 27, or actually performs route guidance based on guide route data 27.

At the vehicle-mounted navigation device 1, when registering, changing or deleting locations, the location registration unit 21 outputs display data for registering, changing or deleting locations in the location registration data 14 to the liquid crystal monitor 5. A screen for registering, changing or deleting locations is thereby displayed on the liquid crystal monitor 5.

Next, based on inputted data generated by the touch panel 8 according to user operation, the location registration unit 21 registers data regarding new locations into the location registration data 14, changes data representing information on locations registered on the location registration data 14, or deletes registered data regarding locations from the location registration data 14.

More specifically, for instance when registering a location, an input screen for inputting the name, genre, guide time, value and the like of the location to be registered is displayed on the liquid crystal monitor 5. The location registration unit 21 generates data representing information regarding the new location based on inputted data outputted by the touch panel 8 according to user operation, and adds a record containing the generated data to the location registration data 14.

The value of the location to be registered in the location registration data 14 may be directly inputted by the user. Alternatively, for instance, map data 19 of the location to be registered may be displayed on the liquid crystal monitor 5 to identify a dot on the map display data corresponding to the location selected on the display, and the value indicating the position of the dot may be registered as the value of the location.

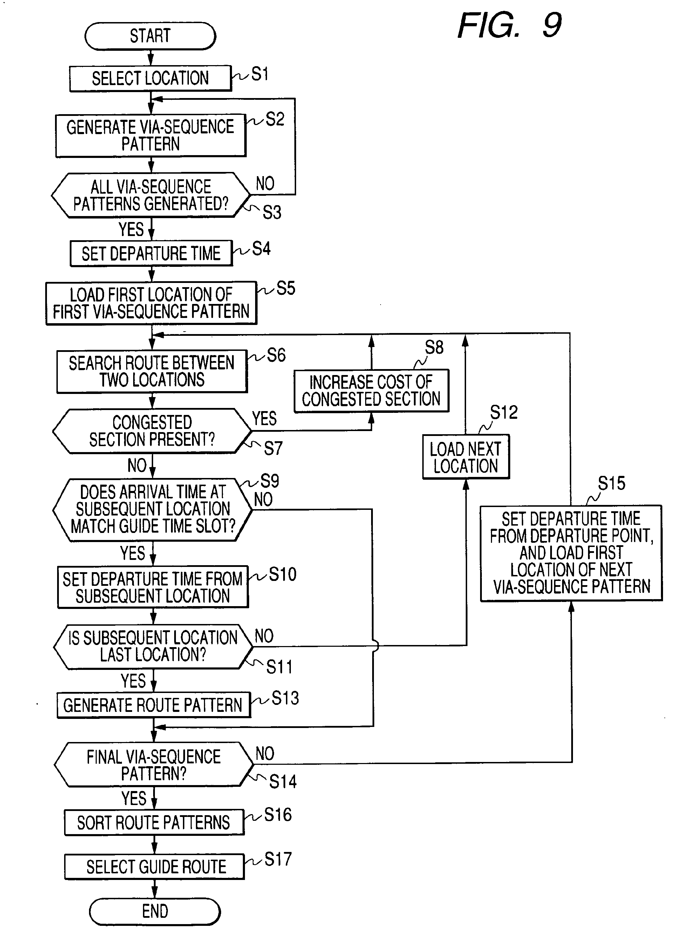

In addition, when generating guide route data 27, the vehicle-mounted navigation device 1 executes guide route generation processing. Figure 9 is a flowchart showing guide route generation processing by the vehicle-mounted navigation device 1 shown in Figure 1.

In guide route generation processing, the location selection unit 22 first selects a location from the location search data 13 and the location registration data 14, and registers the selected location into the location list 25 (step S1).

More specifically, the location selection unit 22 makes the liquid crystal monitor 5 display information regarding locations in the location search data 13 and information regarding locations in the location registration data 14. Then, as the user operates the touch panel 8 to select a desired location, the location selection unit 22 registers the selected location. In addition, the location selection unit 22 generates a location list 25 on the RAM 3 or the hard disk drive 4, and registers information regarding the selected location into the location list 25.

The location selection unit 22 also enables selection of a plurality of locations based on selection and operation by the user. When a plurality of locations is selected by the location selection unit 22, information regarding the plurality of locations is registered into the location list 25.

Once selection of a location is completed, the route pattern generation unit 23, as determination means, generates a via-sequence pattern which sequentially visits the locations registered in the location list 25. More specifically, for instance, the route pattern generation unit 23 generates a via-sequence pattern which sequentially visits each location registered in the location list once, and stores the generated via-sequence pattern as a via-sequence pattern list in the RAM 3 or the hard disk drive 4 (step S2). In addition, the route pattern generation unit 23 verifies whether all via-sequence patterns in which all the locations registered in the location list 25 are visited once in sequence have been generated (step S3), and repeats the processing of via-sequence pattern generation until the verification results in "Yes".

When the generation of via-sequence patterns is concluded, the route pattern generation unit 23 prompts the user to input a place and time of departure (step S4). This means that while a time for each location along the route will be calculated in subsequent processing, the time of departure will be set as its initial value. In addition, the route pattern generation unit 23, as calculation means, obtains an arrival time of each location of each via-sequence pattern (arrival time at location) based on the inputted departure time, and performs adequacy judgment of each via-sequence (judgment of whether the arrival time at each via-location satisfies the conditions at each via-location) based on the obtained arrival times.

More specifically, for instance, the route pattern generation unit 23 first loads the first location of the first via-sequence pattern stored in the RAM 3 or the hard disk drive 4 (step S5).

Next, the route pattern generation unit 23, as search means, uses route search data 16 and route search condition data 18 to search a route from the departure point (hereinafter also referred to as "previous location") to the first location "hereinafter also referred to as "subsequent location") (step S6). For instance, when a search for a shortest route is specified in the route search condition data 18, the route pattern generation unit 23 searches a route where the travel distance from the previous location to the subsequent location is minimum from the route search data 16, and generates route data between the two locations. The route data between the two locations is list data in which identification information of links corresponding to the roads to be passed through and identification information of nodes such as intersections to be passed through are arranged in the sequence of passage.

Once the route data between the two locations is generated, the route pattern generation unit 23 compares the route data between the two locations to the accumulated congestion data 17, and verifies whether links or nodes to be passed through during congested time slots are included in the route data between the two locations (step S7).

As described above, the route data between the two locations is list data in which identification numbers of links and identification numbers of nodes are arranged in the via-sequence. Thus, for example, when the route between a location S and a location A is "S → p → q → r → A" (where p, q and r are via-nodes), a time obtained by adding the travel time of the S → p segment to the departure time at location S is deemed the passage time at node p, a time obtained by adding the travel time of the p → q segment to the passage time at node p is deemed the passage time at node q, a time obtained by adding the travel time of the q → r segment to the passage time at node q is deemed the passage time at node r, a time obtained by adding the travel time of the r → A segment to the passage time at node r is deemed the arrival time at the location A, and the obtained passage and arrival times are compared to the congestion information in the accumulated congestion data 17 of each node and link.

When links or nodes to be passed through during congested time slots are included in the route data between the two locations, the route pattern generation unit 23, as re-search means, changes the value of cost information of the congested link or node to a predetermined greater value (for instance, an allowable maximum value) (step S8), and then re-searches a route between the two locations (step S6).

Alternatively, for the re-search processing of a route between the two locations, the route pattern generation unit 23 may be arranged to either re-search all routes between the two locations, or re-search only the segments before and after the link or node which contained the congestion information.

As a result of re-search processing of a route between the two locations, for instance, when the links before and after the node p in the above route "S → p → q → r → A" is congested, the route pattern generation unit 23 obtains, for instance, a route "S → t → q → r → A" (where t is a node different from p) through re-search.

After the re-search processing of the route between the two locations (step S6), the route pattern generation unit 23 compares the re-searched route data to the accumulated congestion data 17, and verifies whether links or nodes to be passed through during congested time slots are included in the re-searched route data (step S7).

In the re-searched route data between the two locations, while the latter half "q → r → A" is the same route as in the route data between the two locations prior to re-search, since the travel time of "S → p → q" generally differs from that of "S → t → q", the passage times at nodes q and r as well as the arrival time at location A should also be re-compared to the accumulated congestion data 17.

In addition, the route pattern generation unit 23 repeats the re-search processing and verification processing (steps S8, S6 and S7) of routes between the two locations until links or nodes to be passed through during congested time slots are no longer included in the re-searched route data between the two locations.

When links or nodes to be passed through during congested time slots are no longer included in the re-searched route data between the two locations ("No" in step S7), the route pattern generation unit 23, as time calculation means, adds the travel time of the route not containing congestion to the departure time at the previous location. The arrival time at the subsequent location among the two locations is thereby obtained.

Once the arrival time at the subsequent location is obtained, the route pattern generation unit 23, as judgment means, compares the arrival time at the subsequent location to the table of location conditions based on genre 15. More specifically, the guide time slot associated with genres of the subsequent location (condition of arrival time at each location) is compared to the arrival time at the subsequent location (step S9).

When the arrival time at a subsequent location is within the guide time slot thereof, the route pattern generation unit 23 judges the arrival time to be appropriate. The route pattern generation unit 23 further adds a stay time at the subsequent location to the arrival time at the subsequent location.

After adding the stay time at a subsequent location to the arrival time at that location to set a departure time from that location (step S10), the route pattern generation unit 23 determines whether the subsequent location is the last location of the via-sequence pattern (step S11).

If the subsequent location is not the last location of the via-sequence pattern, the route pattern generation unit 23 sets the subsequent location as a new previous location, and loads a location to be visited after the subsequent location and sets the loaded location as the new subsequent location (step S12).

When the arrival time at the subsequent location is not within the guide time slot thereof in step S9, the route pattern generation unit 23 discontinues search processing regarding the via-sequence pattern, and skips the processing of steps S10 and S11.

The route pattern generation unit 23 next performs route search processing and judgment processing of steps S6 to S11 for routes between the two locations of the new subsequent location and the new previous location. The processing of steps S6 to S12 is repeated until the subsequent location at the time of judgment processing becomes the last location in the via-sequence.

The above-described series of processing allows the route pattern generation unit 23 to obtain arrival times at all of the locations in the first via-sequence pattern stored in the RAM 3 or the hard disk drive 4.

When the subsequent location is judged to be the last location in the via-sequence pattern in step S11 (in other words, when all of the locations included in the via-sequence have been judged to be appropriate), the route pattern generation unit 23 generates the route pattern and stores the generated route pattern into the RAM 3 or the hard disk drive 4 (step S13). The route pattern includes its underlying via-sequence pattern, and the arrival time for each location in the via-sequence.

Next, the route pattern generation unit 23 determines whether the via-sequence pattern is the last via-sequence pattern stored in the RAM 3 or the hard disk drive 4 (step S14).

If the processed via-sequence pattern is not the last via-sequence pattern stored in the RAM 3 or the hard disk drive 4 ("No" in step S14), the route pattern generation unit 23 sets a departure time for the departure point, and loads the first two locations of a next via-sequence pattern (step S15), and repeats the above-described processing of steps S6 to S14.

Thus, the route pattern generation unit 23 determines adequacy of the arrival time at each location in each via-sequence for all via-sequence patterns stored in the RAM 3 or the hard disk drive 4, and stores route patterns based on via-sequence patterns in which all locations have been determined to be adequate into the RAM 3 or the hard disk drive 4. Thus, a route pattern list 26 is configured by one or more route patterns stored in the RAM 3 or the hard disk drive 4.

After storing a route pattern based on the last via-sequence pattern into the RAM 3 or the hard disk drive 4 ("Yes" in step S14), the route pattern generation unit 23 sorts one or more route patterns contained in the route pattern list 26 in ascending order of the arrival time of each last location (hereinafter also referred to as "destination") (step S16).

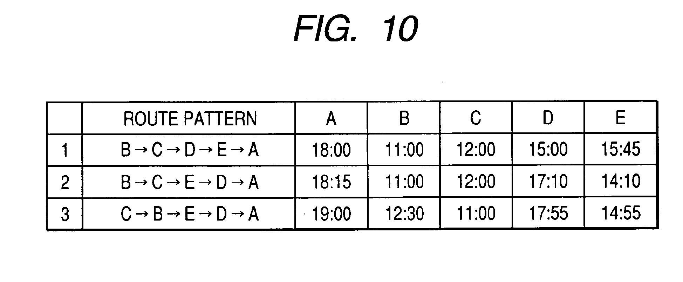

Figure 10 is a diagram showing an example of a route pattern list 26 generated by the route pattern generation unit 23 shown in Figure 7. Each record of the route pattern list 26 includes a single route pattern. Each row of Figure 10 corresponds to a single record. In addition, each record shown in Figure 10 contains, as information of a single route pattern, data representing a via-sequence of a plurality of locations A, B, C, D, E, and data representing an arrival time at each location. For instance, the route pattern in the first row is a route pattern where the locations are visited in the sequence of "B → C → D → E → A" after departing the current location, and the respective arrival times are "11:00" at location B, "12:00" at location C, "15:00" at location D, "15:45" at location E, and "18:00" at location A (the destination in this via-sequence).

In addition, the route pattern list 26 in Figure 10 shows three route patterns which visit the five locations A to E shown in Figure 3 after departing the current location. In the route pattern list 26 in Figure 10, the arrival time at the last location (destination) is earlier in the first row than in the second row, and is earlier in the second row than in the third row. In other words, in the route pattern list 26 in Figure 10, the plurality of route patterns are sorted in ascending order of arrival times at the last location (destination).

Once the route pattern list 26 is generated, the route pattern display selection unit 24 performs processing for selecting a single route pattern from the route patterns registered in the route pattern list 26 as a guide route 27 (step S17).

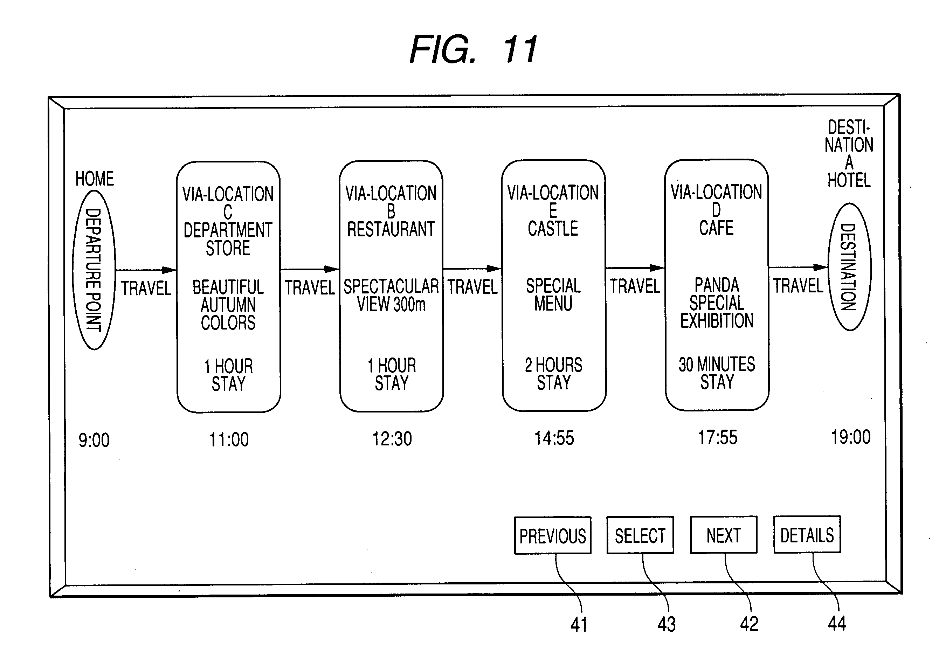

More specifically, for instance, the route pattern display selection unit 24 first displays route patterns registered in the route pattern list 26 onto the liquid display monitor 5. Figure 11 is a diagram showing an example of a display screen of a route pattern. The display screen shown in Figure 11 is a display screen displaying the route pattern of the third row in Figure 10. In the display screen shown in Figure 11, the departure point and a plurality of locations are shown aligned according to the via-sequence from left to right of the screen. In addition, in the display screen shown in Figure 11, the name, stay time and arrival time of each location are displayed as information regarding each location.

Furthermore, images of a "previous" button 41, a "next" button 42, a "select" button 43 and a "details" button 44 are displayed at the bottom of the display screen shown in Figure 11. When the user operates the "previous" button 41 on the touch panel 8, the route pattern display selection unit 24 displays a route pattern registered in the route pattern list 26 immediately before the currently displayed route pattern onto the display screen. In addition, when the user operates the "next" button 42 on the touch panel 8, the route pattern display selection unit 24 displays a route pattern registered in the route pattern list 26 immediately after the currently displayed route pattern onto the display screen.

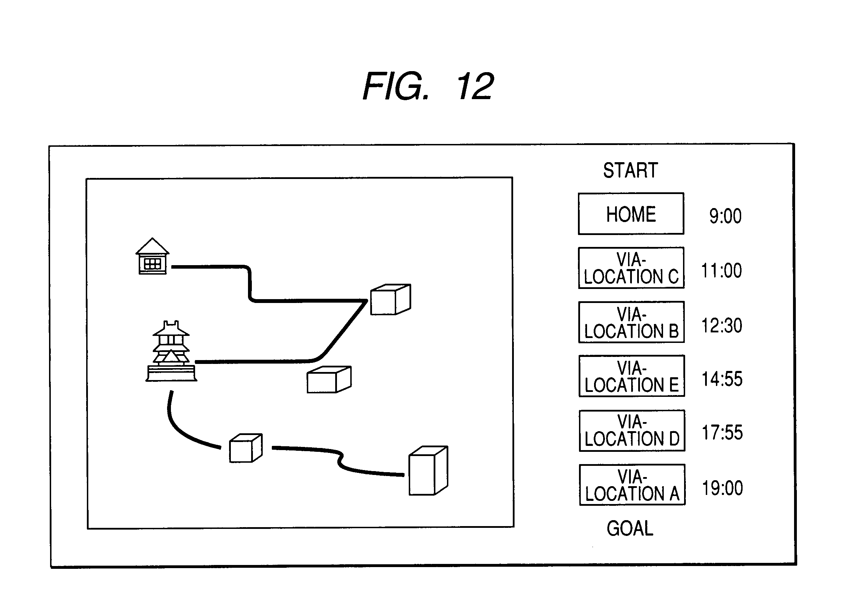

When the user operates the "details" button 44 on the touch panel 8, the route pattern display selection unit 24 displays a screen for displaying detailed information of the currently displayed route pattern on the liquid crystal monitor 5. Figure 12 is a diagram showing an example of a detail display screen of a route pattern. In the detail display screen shown in Figure 12, an entire route diagram is displayed on the lefthand side of the screen. The entire route diagram is, for instance, a plurality of locations allocated on a map loaded from the map data 19. In the detail display screen shown in Figure 12, the departure point and a plurality of locations are shown aligned according to the via-sequence from left to right at the right-hand side of the screen. Through this screen, the user will be able to learn in detail about route patterns.

In addition, when the user operates the "select" button 43 on the touch panel 8, the route pattern display selection unit 24 stores the displayed route pattern as a guide route data 27 into the hard disk drive 4.

The above processing enables the vehicle-mounted navigation device 1 to store a route pattern in which the selected locations are visited without using routes likely to be congested into the hard disk drive 4 as a guide route data 27.

Once the guide route data 27 is stored into the hard disk drive 4, it is now possible to perform route guidance according to the guide route data 27. In the vehicle-mounted navigation device 1, when performing route guidance according to the guide route data 27, the route guidance unit 31 loads data of a predetermined range from the map data 19 based on a current position identified based on the current latitude and longitude of the GPS receiver 9, and displays a map and current position based on the loaded data onto the liquid crystal monitor 5. In addition, the route guidance unit 31 loads guide route data 27 within the displayed range, and displays the guide route so as to be superimposed onto the map.

When a vehicle is in motion, the values of the current latitude and longitude outputted from the GPS receiver 9 also change according to the movement. The route guidance unit 31 updates display of maps and guide routes so that the current position is continuously displayed on the liquid crystal monitor 5.

Therefore, the user will be able to visit the selected locations by moving the vehicle so that its current position moves along the guide route 27.

In addition, when VICS data is outputted from the VICS receiver 10 during route guidance, the route guidance unit 31 displays traffic regulation information or congestion information contained in the VICS data onto the liquid crystal monitor 5 according to settings or the like. Moreover, the congestion information accumulation unit 32 registers congestion information contained in the VICS data into the accumulated congestion data 17 as congestion information of a link or a node having a predetermined identification number.

As seen, the vehicle-mounted navigation device 1 according to the first embodiment is capable of generating a guide route which visits a plurality of locations while giving consideration to the stay time at each location, and guiding the user by the guide route.

In addition, congested places on routes between two locations may preferably be avoided. In particular, by setting the costs of links of congested places to infinity, routes may be searched which ensure that the congested places will be avoided. As for a specific method to set the links of congested places to infinity, for instance, a flag indicating that either the links do not exist or the links will not be used should be generated to avoid including links with such flags in searches.

Therefore, the user will be able to arrive at each location at a desired time without having to pass though places in which congestion may occur, and stay at each location for a desired stay time. As a result, the user will be able to fully enjoy sightseeing, dining or the like at each location.

### Second Embodiment

The hardware configuration, and the types of programs as well as data stored in the hard disk drive of a vehicle-mounted navigation device according to a second embodiment of the present invention is identical to those of the vehicle-mounted navigation device 1 according to the first embodiment. Thus, like reference numerals will be assigned to like parts, and a description thereof will be omitted. However, the guide route generation program 11 will be replaced by a program which performs the processing described below.

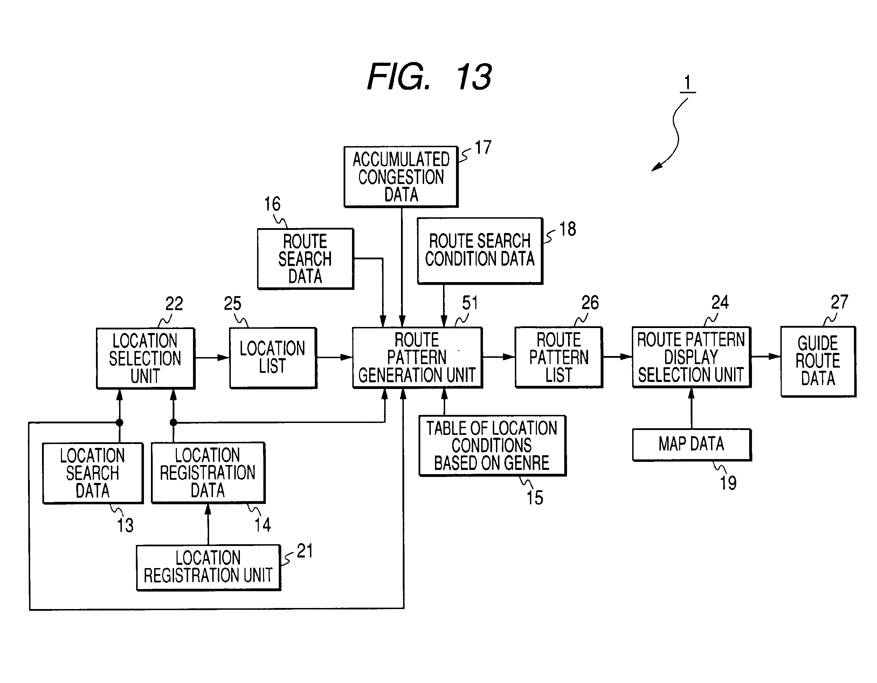

In addition, when a guide route generation program 11 stored in a hard disk drive 4 is executed by a central processing unit 2, a guide route generation function is realized in the vehicle-mounted navigation device 1. Figure 13 is a block diagram showing the guide route generation function realized on the vehicle-mounted navigation device 1 according to the second embodiment of the present invention.

When the central processing unit 2 executes the guide route generation program 11, a location registration unit 21, a location selection unit 22, a route pattern generation unit 51, and a route pattern display selection unit 24 are realized in the vehicle-mounted navigation device 1. Components other than the route pattern generation unit 51 have similar functions to components given the same names according to the first embodiment and are assigned like reference numerals. Thus, descriptions thereof will be omitted.

The route pattern generation unit 51 generates a route pattern list 26 which includes route patterns which originate from a departure point (for instance, the current location) and sequentially visit the locations registered in a location list 25. However, the route pattern generation unit 51 generates the route pattern list 26 as described later.

In addition, the route guidance function realized in the vehicle-mounted navigation device 1 by the central processing unit 2 by executing a route guidance program 12 is similar to the route guidance function of the vehicle-mounted navigation device 1 according to the first embodiment, and is assigned a like reference numeral. Thus, a description thereof will be omitted.

Next, operations of the vehicle-mounted navigation device 1 according to the second embodiment will be described. Based on the above-described configuration, the vehicle-mounted navigation device 1 registers, changes or deletes locations, generates guide route data 27, or actually performs route guidance based on guide route data 27. The operations of registering, changing or deleting locations, as well as operations of actually performing route guidance based on guide route data 27 are similar to the operations performed by the vehicle-mounted navigation device 1 according to the first embodiment, and a description thereof will be omitted.

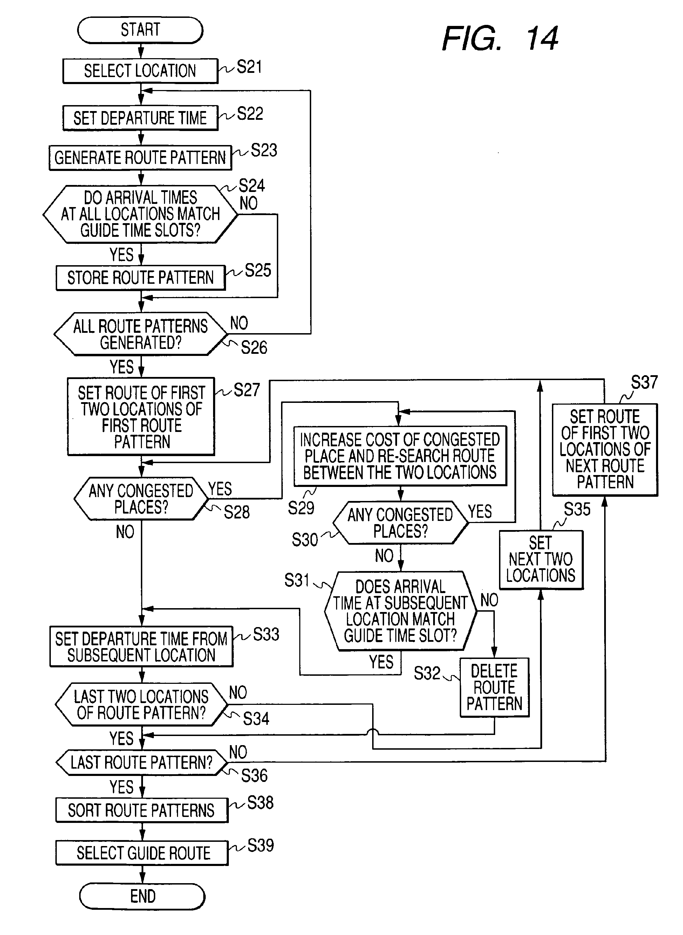

When generating guide route data 27, the vehicle-mounted navigation device 1 executes guide route generation processing. Figure 14 is a flowchart showing guide route generation processing by the vehicle-mounted navigation device 1 according to the second embodiment.

In guide route generation processing, the location selection unit 22 first selects a location from the location search data 13 and the location registration data 14, and registers the selected location into the location list 25 (step S21).

Once the selection of locations is concluded, the route pattern generation unit 51 prompts the user to input a place and time of departure (step S22).

Once the place and time of departure are inputted, the route pattern generation unit 51 commences generation of route patterns based on the inputted departure time (step S23).

More specifically, for instance, the route pattern generation unit 51, as determination means, determines a via-sequence of locations registered in the location list 25. Next, the route pattern generation unit 51, as calculation means, search means and first time calculation means, references the route search data 16 and the route search condition data 18, and obtains an arrival time at the first location in the via-sequence after departing the departure point at the departure time. When a plurality of locations are registered in the location list 25, the route pattern generation unit 51 adds the stay time at the first via-location stored in a table of location conditions based on genre 15 to the arrival time of the earlier first location, and further references the route search data 16 and the route search condition data 18 to obtain an arrival time at the second location. In addition, the route pattern generation unit 51 repeats such addition processing of stay times and addition processing of travel times between two locations based on the route search data 16 and the route search condition data 18, until arrival times for all locations including the last are obtained. In this manner, the route pattern generation unit 51 generates a single route pattern in step S23.

Once a route pattern based on the route search data 16 and the route search condition data 18 is generated, the route pattern generation unit 51, as judgment means and first judgment means, compares the arrival time at each location in the route pattern to guide time slots according to genre of each location registered in the table of location conditions based on genre 15 (step S24).

When the arrival times at all locations respectively match the guide time slots thereof, the route pattern generation unit 51 stores the route pattern into the RAM 3 or the hard disk drive 4. The data of the route pattern stored at this point includes data representing a via-sequence of locations, arrival and departure time of each location, and route data between two locations (step S25). On the other hand, when the arrival time of at least any one of the locations does not match the guide time slot thereof, the route pattern generation unit 51 does not store the route pattern.

Next, the route pattern generation unit 51 judges whether all the route patterns have been generated (step S26). When all of the route patterns have not been generated ("No" in step S26), the route pattern generation unit 51 performs the above-described processing of steps S22 to S25 for the next route pattern.

Thus, only route patterns which sequentially visit the locations registered in the location list 25, and in which the arrival times of all locations based on the route search data 16 and the route search condition data 18 satisfy the guide time slots according to genre, are stored in the RAM 3 or the hard disk drive 4.

Next, the route pattern generation unit 51, as re-search means, performs re-evaluation incorporating congestion information on each route pattern stored in the RAM 3 or the hard disk drive 4. More specifically, for instance, the route pattern generation unit 51 first selects a route data between the first two locations in the first route pattern (step S27), and compares the selected route data between the two locations to congestion information in the accumulated congestion data 17 (step S28).

When congested places are included in the route data between the first two locations, the route pattern generation unit 51 changes the value of cost information of the congested link or node to a predetermined greater value (for instance, an allowable maximum value), and then re-searches a route data between the two locations (step S29). In addition, the route pattern generation unit 51 judges whether congested places are included in the route of the re-searched route data between the two locations (step S30). By repeating the re-search processing of route data between the two locations, and judgment processing based on the presence/absence of congested places, congested places will no longer be included in the route data between the two locations.

When congested places are no longer included in the route data between the two locations, the route pattern generation unit 51, as time calculation means and second time calculation means, calculates arrival times at a subsequent location in the route data, and judges whether the arrival time at the subsequent location matches the guide time slot of the location in the table of location conditions based on genre 15 (step S31). When the arrival time at the subsequent location does not match the guide time slot thereof, the route pattern generation unit 51 deletes the route pattern from the RAM 3 or the hard disk drive 4 (step S32), and performs step S36 described later.

When the arrival time at the subsequent location matches the guide time slot thereof, the route pattern generation unit 51 sets a departure time of the subsequent location (step S33), and judges whether the two locations that have just been evaluated are the last two locations of the route pattern (step S34).

If the two locations that have just been evaluated are not the last two locations of the route pattern, the route pattern generation unit 51 loads the two locations of the current subsequent location and a next location (step S35), and repeats the above-described processing of steps S28 to 533.

On the other hand, if the two locations that have just been evaluated are the last two locations of the route pattern, the route pattern generation unit 51 further determines whether the route pattern is the last route pattern stored in the RAM 3 or the hard disk drive 4 (step S36). If the route pattern that has just been evaluated is not the last route pattern, the route pattern generation unit 51 loads two locations of the next route pattern (step S37), and performs the above-described processing of steps S28 to S35.

Thus, only route patterns which sequentially visit the locations registered in the location list 25 through routes that are not congested are stored in the RAM 3 or the hard disk drive 4. In addition, the arrival time of each location in each route pattern takes into consideration route search data 16, route search condition data 18, and accumulated congestion data 17.

When update processing of such route patterns stored in the RAM 3 or the hard disk drive 4 is concluded ("Yes" in step S36), the route pattern generation unit 51 sorts one or more route patterns stored in the RAM 3 or the hard disk drive 4 in ascending order of the arrival time of each last location (hereinafter also referred to as "destination") (step S38). A route pattern list 26 is thereby generated.

Once the route pattern list 26 is generated, the route pattern display selection unit 24 performs processing for selecting a single route pattern from the route patterns registered in the route pattern list 26 as a guide route 27 (step S39). In addition, the route pattern display selection unit 24 stores the selected route pattern into the hard disk drive 4 as guide route data 27.

The above processing enables the vehicle-mounted navigation device 1 to store a route pattern in which the selected locations are visited without using routes likely to be congested into the hard disk drive 4 as a guide route data 27.

As seen, the vehicle-mounted navigation device 1 according to the second embodiment is capable of generating a guide route data 27 which visits a plurality of locations while giving consideration to the stay time at each location, and guiding the user by the guide route data 27. In addition, congested places (places which may be congested) may be preferably avoided for routes between two locations. Therefore, the user will be able to arrive at each location at a desired time without having to pass though places in which congestion may occur, and stay at each location for a desired stay time. As a result, the user will be able to fully enjoy sightseeing, dining or the like at each location.

In addition, in the second embodiment, the arrival time at each location in each route pattern is computed in advance based only on route search data 16 and route search condition data 18, and route patterns that also consider congestion information are generated only for route patterns in which the arrival time at each location matches guide times in the table of location conditions based on genre 15. Therefore, it is no longer necessary to compute arrival times for locations while also giving consideration to congestion information for all route patterns (via-sequence patterns), as was the case in the first embodiment. As a result, according to the route pattern generation unit 51 of the second embodiment, the route pattern list 26 is more likely to be generated with less computation throughput compared to the route pattern generation unit 23 of the first embodiment when there is abundant congestion information in the accumulated congestion data 17.

### Third Embodiment

The hardware configuration, and the types of programs as well as data stored in the hard disk drive of a vehicle-mounted navigation device according to a third embodiment of the present invention is identical to those of the vehicle-mounted navigation device 1 according to the first embodiment. Thus, like reference numerals will be assigned to like parts, and a description thereof will be omitted. However, the guide route generation program 11 will be replaced by a program which performs the processing described below.

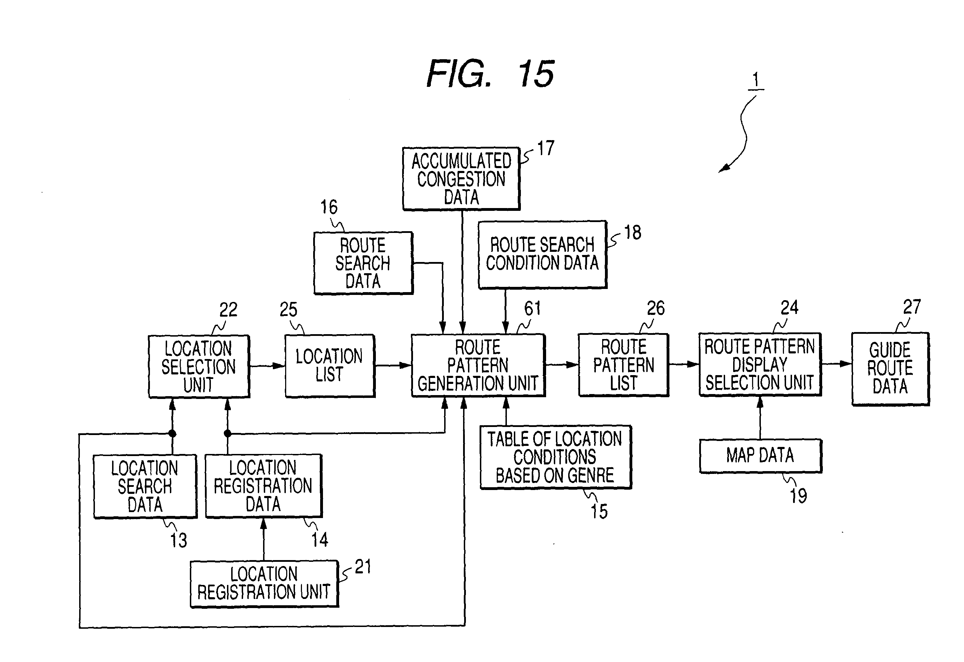

In addition, when a guide route generation program 11 stored in a hard disk drive 4 is executed by a central processing unit 2, a guide route generation function is realized in the vehicle-mounted navigation device 1. Figure 15 is a block diagram showing the guide route generation function realized on the vehicle-mounted navigation device 1 according to the third embodiment of the present invention.

When the central processing unit 2 executes the guide route generation program 11, a location registration unit 21, a location selection unit 22, a route pattern generation unit 61, and a route pattern display selection unit 24 are realized in the vehicle-mounted navigation device 1. Components other than the route pattern generation unit 61 have similar functions to components given the same names according to the second embodiment, and are assigned like reference numerals. Thus, descriptions thereof will be omitted.

The route pattern generation unit 61 generates a route pattern list 26 which includes route patterns which originate from a departure point (for instance, the current location) and sequentially visit the locations registered in a location list 25. However, the route pattern generation unit 61 generates the route pattern list 26 as described later.

In addition, the route guidance function realized in the vehicle-mounted navigation device 1 by the central processing unit 2 by executing a route guidance program 12 is similar to the route guidance function of the vehicle-mounted navigation device 1 according to the second embodiment, and is assigned a like reference numeral. Thus, a description thereof will be omitted.

Next, operations of the vehicle-mounted navigation device 1 according to the third embodiment will be described. Based on the above-described configuration, the vehicle-mounted navigation device 1 registers, changes or deletes locations, generates guide route data 27, or actually performs route guidance based on guide route data 27. The operations of registering, changing or deleting locations, as well as operations of actually performing route guidance based on guide route data 27 are similar to the operations performed by the vehicle-mounted navigation device 1 according to the second embodiment, and a description thereof will be omitted.

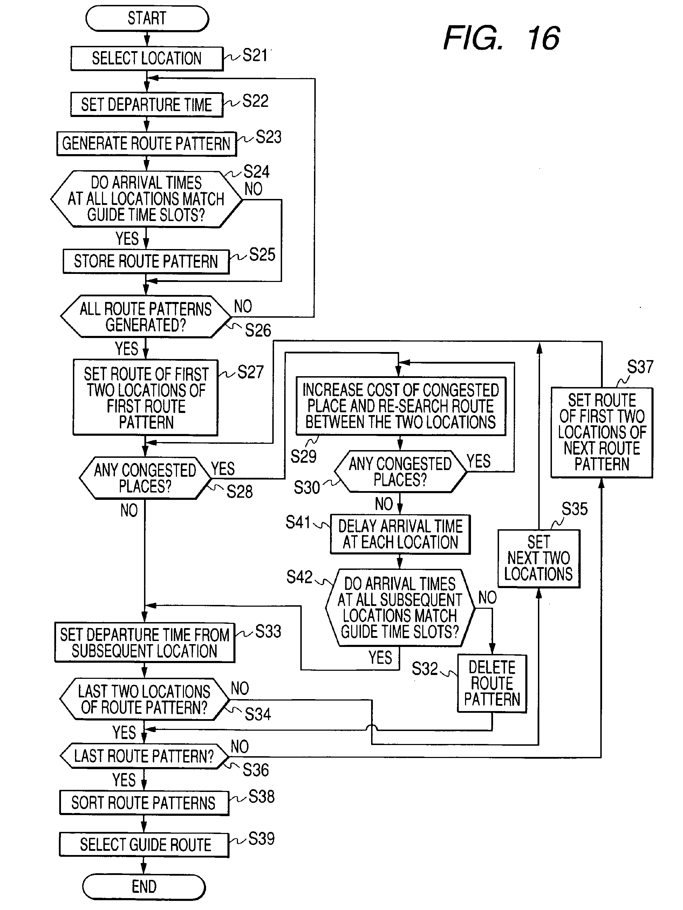

When generating guide route data 27, the vehicle-mounted navigation device 1 executes guide route generation processing. Figure 16 is a flowchart showing guide route generation processing by the vehicle-mounted navigation device 1 according to the third embodiment.

In the guide route generation processing, the processing from location selection in step S21 to judgment of presence/absence of congested places in re-searched route data between the two locations in step S30 is similar to the guide route generation processing in the second embodiment shown in Figure 14, and a description thereof will be omitted.

When congested places are no longer included in the route data between the two locations ("No" in step S30), the route pattern generation unit 61, as time calculation means and second time calculation means, recalculates an arrival time at the subsequent location in the route data as well as arrival times at locations to be visited after the subsequent location (step S41).

When deeming the time difference between the arrival time of the subsequent location stored in step S25 and the arrival time of the subsequent location obtained in the current step as a delay time, the route pattern generation unit 61 updates the arrival times at locations to be visited after this point to times obtained by adding the delay time to the respective arrival times stored in step S25.

For instance, for a route pattern of "S → A → B → D" (where S, A, B and D are locations), assume that the route between " S → A" has been changed to a detour route (in other words, a different route) to avoid congestion, and as a result, the arrival at location A was delayed by 10 minutes. The delay time is thus 10 minutes. In this case, the route pattern generation unit 61 delays both the arrival time at location B and the arrival time at location D by 10 minutes.

Once the arrival time at each location is updated, the route pattern generation unit 61, as judgment means and second judgment means, judges whether the arrival time at the subsequent location according to the route data and the arrival times at locations to be visited after the subsequent location match their respective guide time slots in the table of location conditions based on genre 15 (step S42).

If the arrival time of at least any one of the locations does not, match the guide time slot thereof ("No" in step S42), the route pattern generation unit 61 deletes the route pattern from the RAM 3 or the hard disk drive 4 (step S32), and performs step S36 described later.

In addition, if the arrival times at all of the locations match the guide time slots thereof, the route pattern generation unit 61 sets a departure time for the subsequent location (step S33), and continues adequacy judgment processing on the route pattern while also taking congestion information into consideration.

Subsequent guide route generation processing is similar to the guide route generation processing of the second embodiment shown in Figure 14, and a description thereof will be omitted.

As seen, the vehicle-mounted navigation device 1 according to the third embodiment is capable of generating a guide route which visits a plurality of locations while giving consideration to the stay time at each location, and guiding the user by the guide route. In addition, congested places may be preferably avoided for routes between two locations. Therefore, the user will be able to arrive at each location at a desired time without having to pass though places in which congestion may occur, and stay at each location for a desired stay time. As a result, the user will be able to fully enjoy sightseeing, dining or the like at each location.

Furthermore, in the third embodiment, in the event that the arrival time at a location in each route pattern is updated based on congestion information, the arrival times at locations subsequent to that location are similarly delayed, and judgment is rendered on whether the arrival times at all of the locations match their respective guide times. Therefore, for instance, when the arrival time at a location is delayed from its guide time due to congestion (anticipated congestion) at locations right up to the immediately previous location, evaluation of the route pattern may be concluded and the route pattern may be deleted upon calculation of the arrival time at the immediately previous location.

In the earlier example, when the arrival time at location A was delayed by 10 minutes, the arrival times at locations B and D were similarly delayed by 10 minutes, and the arrival times at locations B and D were also compared to their respective guide time slots when the arrival time at location A was compared to its guide time slot. Therefore, for instance, in the event that the arrival time at location B no longer matches its guide time slot due to the 10 minute delay, evaluation of the route pattern may be concluded and the route pattern may be deleted upon calculation of the arrival time at location A.

As a result, according to the third embodiment, the route pattern list 26 is more likely to be generated with less computation throughput compared to the second embodiment. Fourth Embodiment

The hardware configuration, and the types of programs as well as data stored in the hard disk drive of a vehicle-mounted navigation device according to a fourth embodiment of the present invention is identical to those of the vehicle-mounted navigation device 1 according to the first embodiment. Thus, like reference numerals will be assigned to like parts, and a description thereof will be omitted. However, the guide route generation program 11 will be replaced by a program which performs the processing described below.

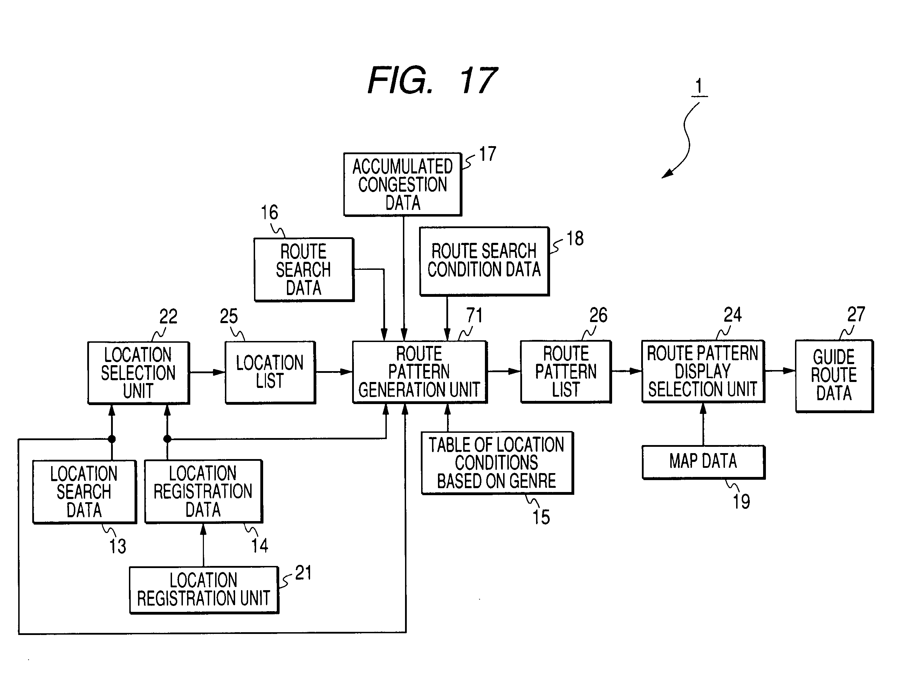

In addition, when a guide route generation program 11 stored in a hard disk drive 4 is executed by a central processing unit 2, a guide route generation function is realized in the vehicle-mounted navigation device 1. Figure 17 is a block diagram showing the guide route generation function realized on the vehicle-mounted navigation device 1 according to the fourth embodiment of the present invention.

When the central processing unit 2 executes the guide route generation program 11, a location registration unit 21, a location selection unit 22, a route pattern generation unit 71, and a route pattern display selection unit 24 are realized in the vehicle-mounted navigation device 1. Components other than the route pattern generation unit 71 have similar functions to components given the same names according to the first embodiment, and are assigned like reference numerals. Thus, descriptions thereof will be omitted.

The route pattern generation unit 71 generates a route pattern list 26 which includes route patterns which originate from a departure point (for instance, the current location) and sequentially visit the locations registered in a location list 25. However, the route pattern generation unit 71 generates the route pattern list 26 as described later.

In addition, the route guidance function realized in the vehicle-mounted navigation device 1 by the central processing unit 2 by executing a route guidance program 12 is similar to the route guidance function of the vehicle-mounted navigation device 1 according to the first embodiment, and is assigned a like reference numeral. Thus, a description thereof will be omitted.

Next, operations of the vehicle-mounted navigation device 1 according to the fourth embodiment will be described. Based on the above-described configuration, the vehicle-mounted navigation device 1 registers, changes or deletes locations, generates guide route data 27, or actually performs route guidance based on guide route data 27. The operations of registering, changing or deleting locations, as well as operations of actually performing route guidance based on guide route data 27 are similar to the operations performed by the vehicle-mounted navigation device 1 according to the first embodiment, and descriptions thereof will be omitted.

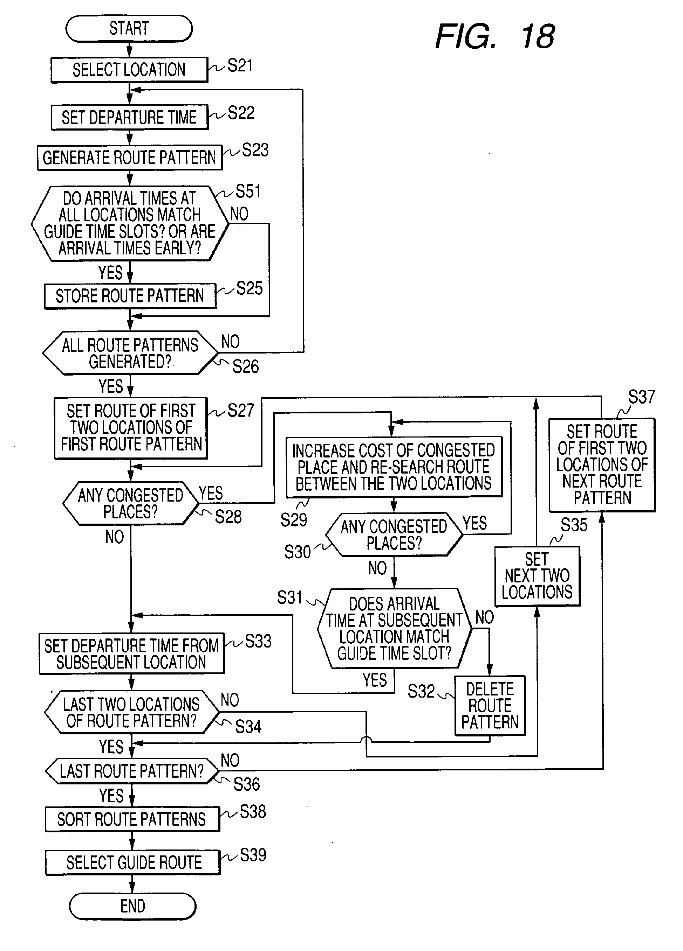

When generating guide route data 27, the vehicle-mounted navigation device 1 executes guide route generation processing. Figure 18 is a flowchart showing guide route generation processing by the vehicle-mounted navigation device 1 according to the fourth embodiment.

In guide route generation processing, the location selection unit 22 first selects a location from the location search data 13 and the location registration data 14, and registers the selected location into the location list 25 (step S21). Once the selection of locations is concluded, the route pattern generation unit 71 prompts the user to input a place and time of departure (step S22).

Once the place and time of departure are inputted, the route pattern generation unit 71, as determination means, calculation means and first time calculation means, commences generation of route patterns based on the inputted departure time (step S23).

Once a route pattern based on the route search data 16 and the route search condition data 18 is generated, the route pattern generation unit 71, as first judgment means, compares the arrival time at each location in the route pattern to guide time slots according to genre of each location registered in the table of location conditions based on genre 15 (step S51).

When the arrival times at all locations either match the respective guide time slots thereof or are earlier than the respective guide time slots thereof, the route pattern generation unit 71 stores the route pattern into the RAM 3 or the hard disk drive 4. The data of the route pattern stored at this point includes data representing a via-sequence of locations, arrival and departure time of each location, and route data between two locations (step S25). After storing the route pattern, the route pattern generation unit 71 judges whether all the route patterns have been generated (step S26).

On the other hand, if the arrival time at any one of the locations is later than the finish time of the guide time slot thereof ("Yes" in step S51), the route pattern generation unit 71 discards the route pattern, and in step S26, judges whether all the route patterns have been generated.

Subsequent guide route generation processing is similar to the guide route generation processing of the second embodiment shown in Figure 14, and a description thereof will be omitted.

As seen, the vehicle-mounted navigation device 1 according to the fourth embodiment is capable of generating a guide route which visits a plurality of locations while giving consideration to the stay time at each location, and guiding the user by the guide route. In addition, congested places may be preferably avoided for routes between two locations. Therefore, the user will be able to arrive at each location at a desired time without having to pass though places in which congestion may occur, and stay at each location for a desired stay time. As a result, the user will be able to fully enjoy sightseeing, dining or the like at each location.

In addition, in the fourth embodiment, for route patterns at which time congestion information was not taken into consideration, route patterns in which the arrival time at each location is earlier than their guide time slots are stored. Therefore, it is now possible to include route patterns in which the arrival time of a location is delayed due to subsequent and additional consideration of congestion information which in turn results in the arrival time now matching the guide time slot to the route pattern list 26.

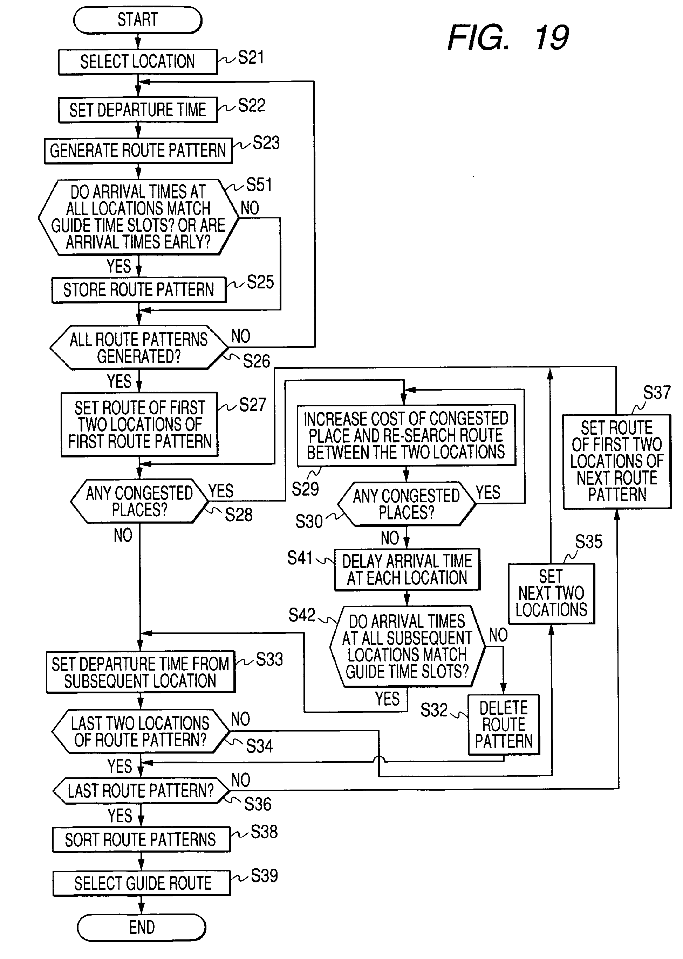

While the guide route generation function of the fourth embodiment shown in Figure 18 has been based on the guide route generation function of the second embodiment shown in Figure 14, route patterns which will match guide time slots by additional consideration of congestion information may be included in the route pattern list 26 even if the guide route generation function of the fourth embodiment is based on the guide route generation function of the third embodiment shown in Figure 16. Figure 19 is a flowchart showing an example of a variation of guide route generation processing according to the fourth embodiment. The guide route generation processing shown in Figure 19 is based on the guide route generation processing shown in Figure 16. The steps shown in Figure 19 are similar to the steps shown in Figure 16 or Figure 18. Thus, like steps will be assigned like reference characters, and descriptions thereof will be omitted.

While the embodiments described above are examples of preferred embodiments of the present invention, the present invention is not limited to these embodiments, and a wide range of variations and modifications may be achieved.

In the above-described embodiments, a point of departure is specified separately from the selected location when generating a guide route. Alternatively, for instance, one of the selected locations may be arranged to be selected as the point of departure. In addition, while combinations of via-sequences of all of the selected locations are examined in the above embodiments, one of the selected locations may be specified in advance as the destination (the location to be visited last), and examination of the combinations of via-sequences of the remaining locations may be performed instead. This will enable reduction of the number of via-sequence combinations to be examined.

In the above-described embodiments, a departure point and a departure time are arranged to be inputted after commencing generation of a via-sequence pattern or a route pattern. Alternatively, for instance, the departure point and the departure time may be arranged to be inputted upon location selection.

In the above-described embodiments, accumulated congestion data 17 is stored in the hard disk drive 4 of the vehicle-mounted navigation device 1. Alternatively, for instance, the accumulated congestion data 17 may be arranged to be stored in a server that is separate from the vehicle-mounted navigation device 1, and the vehicle-mounted navigation device 1 may access the server via a wireless network or the like to acquire necessary congestion information from the server. In this case, a wireless communication device for accessing the server will be required in the vehicle-mounted navigation device 1.

In addition, when acquiring congestion information from a separate server in this manner, the vehicle-mounted navigation device 1 should merely transmit identification numbers of a link and node to the server, and the server should transmit congestion information of the link and node of the identification numbers.

Furthermore, the server may transmit all congestion information of the links shown in Figure 5 or 6, or transmit congestion information together with time information from the vehicle-mounted navigation device 1, or transmit only the presence/absence of congestion during a given time slot of a given day of the week shown in Figure 5 or 6. When the travel times shown in Figure 6 are stored in the server, the server may be arranged to judge the presence/absence of congestion at each link or node, and to transmit the result of such judgment.

In the above-described embodiments, congestion information of each link and node is registered after being classified into day of the week-based information and time slot-based information. Alternatively, for instance, congestion information may be roughly classified only by day of the week or by time slot. Conversely, congestion information may be further broken down by date or by season.

In the above-described embodiments, congestion information accumulated in the accumulated congestion data 17 is generated based on VICS information outputted by the VICS receiver 10 and the like, and the route pattern generation units 23, 51, 61 and 71 identify congested places based on the congestion information in the accumulated congestion data 17. In other words, the route pattern generation units 23, 51, 61 and 71 identify places (links) which may be congested as places to be avoided. Alternatively, for instance, the route pattern generation units 23, 51, 61 and 71 may be arranged to identify places (links or the like) which are actually congested at the time of route search, based on current congestion information outputted by the VICS receiver 10 during route search, as congested routes to be avoided, or to identify congestion routes to be avoided based on both places which may be congested based on past congestion information and places indicated as currently congested in current congestion information.

In addition, past congestion information or information regarding places which may be congested may be accumulated on a server from which data is retrievable by communication means, not shown, of the vehicle-mounted navigation device 1, instead of in the accumulated congestion data 17. In particular, by accumulating nationwide congestion information based on, for instance, VICS information, the route pattern generation units 23, 51, 61 and 71 will be able to identify congestion places over entire routes even when searching for routes across a plurality of prefectures. Furthermore, by accumulating travel times transmitted from other vehicles currently traveling or congestion information based on the travel times or the like into the server, the route pattern generation units 23, 51, 61 and 71 will be able to determine congestion places even on routes not included in VICS information.

In the event that the route pattern generation units 23, 51, 61 and 71 generate route patterns which avoid only places (links and the like) which are actually congested upon route search, it is anticipated that places which are congested according to information upon route search are more unlikely to be congested when actually passing through such places. Therefore, in the event that the route pattern generation units 23, 51, 61 and 71 generate route patterns which avoid only places (links and the like) which are actually congested upon route search, instead of determining congested places for all the routes in route pattern, the route pattern generation units 23, 51, 61 and 71 may be arranged to determine congested places only on a portion of the routes, such as within a range of a predetermined distance from the departure point, or only on routes visited within a predetermined time range from the departure time from the departure point. As described, when determining congested places only on a portion of the route, the route pattern generation units 23, 51, 61 and 71 may determine congested places based only on, for instance, FM-VICS congestion information received by the VICS receiver 10. Incidentally, congestion information is provided on a per-prefectural basis through FM-VICS congestion information.

In addition, in the above-described embodiments, past congestion information or information regarding places which may be congested may be arranged to be generated based on a travel time of each link which has been actually experienced by the user's own vehicle. Alternatively, the information may be arranged to be generated based on a travel time of each link experienced by a large number of vehicles mounted with similar devices.

### Industrial Applicability

The present invention may be widely utilized in automotive navigation devices, pedestrian navigation devices, as well as other navigation devices.

## Claims

1. A guide route search device, the device comprising:
specification means for specifying a plurality of locations;
calculation means for calculating an arrival time at each of the locations when successively visiting the locations in a certain via-sequence while avoiding passing through congested places and/or places which may be congested;
judgment means for judging whether the calculated arrival time of each location matches an arrival time condition at each location; and
selection means for selecting the via-sequence where the judgment means has judged that the conditions are matched at all the locations specified, as a via-sequence of the guide route.

2. The guide route search device according to claim 1, wherein the calculation means comprises:
determination means for determining a via-sequence of the specified plurality of via-locations;
search means for searching a route between two consecutive locations in the via-sequence;
re-search means for re-searching a route between the two locations when the searched route includes a congested place and/or a place which may be congested, so as to avoid the congested place and/or the place which may be congested; and
time calculation means for calculating an arrival time at each of the locations, either based on a travel time between the two locations of a route searched by the search means when the route searched by the search means does not include a congested place and/or a place which may be congested, or based on a travel time between the two locations of a route re-searched by the re-search means when the route searched by the search means includes a congested place and/or a place which may be congested.

3. A guide route search device, the device comprising:
specification means for specifying a plurality of locations;
determination means for determining a via-sequence of the specified plurality of via-locations;
search means for searching a route between two successive locations in the via-sequence;
first time calculation means for calculating an arrival time at each of the locations based on a travel time between the two locations in the route searched by the search means;
first judgment means for judging whether the arrival time of each location calculated by the first time calculation means matches an arrival time condition at each location;
re-search means for re-searching a route between the two locations when the route which has been judged by the first judgment means to match the arrival time condition includes a congested place and/or a place which may be congested, so as to avoid the congested place and/or the place which may be congested;
second time calculation means for calculating an arrival time at each of the locations based on a travel time between the two locations in the route re-searched by the re-search means;
second judgment means for judging whether the arrival time at each location calculated by the second time calculation means matches the arrival time condition at each location; and
selection means for selecting as the via-sequence of a guide route a single via-sequence from the via-sequences where the first judgment means has judged that the conditions are matched at all the locations specified and which do not include congested places and/or places which may be congested, and from via-sequences where the second judgment means has judged that the conditions are matched at all the locations specified.

4. The guide route search device according to claim 3, wherein
the second time calculation means operates so as to generate arrival times for all the selected locations whenever a travel time between the two locations is computed, and
the judgment means operates so as to judge whether the arrival time of each location generated by the time calculation means matches the arrival time condition at each location whenever a travel time between the two locations is computed.

5. The guide route search device according to claim 3, wherein
the first judgment means operates so as to judge whether the arrival time at each location calculated by the first time calculation means matches a guide time slot at each location;
the second judgment means operates so as to judge whether the arrival time at each location calculated by the second time calculation means matches a guide time slot at each location; and
the re-search means operates so as to re-search a route between the two locations in which the arrival times at a portion of or all of the locations are judged by the first judgment means to be earlier than the respective guide time slots thereof, and when the route includes congested places and/or places which may be congested for via-sequences where the arrival times of the remaining locations match the respective guide time slots thereof, re-searches a route between the two locations so as to avoid the congested places and/or the places which may be congested.

6. A guide route search method, the method comprising the steps of:
specifying a plurality of locations;
calculating the arrival time at each of the locations when successively visiting the locations in a certain via-sequence while avoiding passing through congested places and/or places which may be congested;
judging whether the calculated arrival time of each location matches the arrival time condition at each location; and
selecting the via-sequence where all the specified locations are judged to match arrival time conditions in the judgment step, as a guide via-sequence.

7. A computer program which causes a computer to execute the steps of:
specifying a plurality of locations;
calculating an arrival time at each of the locations when successively visiting the locations in a certain via-sequence while avoiding passing through congested places and/or places which may be congested;
judging whether the calculated arrival time of each location matches an arrival time condition at each location; and
selecting a via-sequence where all the specified locations are judged to match arrival time conditions in the judgment step, as a guide via-sequence.
